(19) **Europäisches Patentamt**

**European Patent Office**

**Office européen des brevets**

(11) **EP 1 473 677 A1**

(12) **EUROPÄISCHE PATENTANMELDUNG**

(43) Veröffentlichungstag:
03.11.2004 **Patentblatt 2004/45**

(51) Int Cl.$^7$: **G06T 15/50**

(21) Anmeldenummer: **04405196.9**

(22) Anmeldetag: **31.03.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(30) Priorität: **30.04.2003 EP 03405303**

(71) Anmelder: **Sulzer Markets and Technology AG**
**8401 Winterthur (CH)**

(72) Erfinder: **Margadant, Felix**
**7304 Maienfeld (CH)**

(74) Vertreter: **Sulzer Management AG**
**Patentabteilung / 0067,**
**Zürcherstrasse 12**
**8401 Winterthur (CH)**

(54) **Verfahren zum Visualisieren eines 3D Datensatzes unter Verwendung eines Beleuchtungsmodells**

(57) Erfindungsgemäss wird ein Verfahren zum Visualisieren eines räumlich aufgelösten Datensatzes (D) unter Verwendung eines Beleuchtungsmodells (BM) vorgeschlagen, wobei ein Datum $(D(\alpha,\beta,\gamma))$ des Datensatzes (D) jeweils einem Volumenelement (V) zugeordnet ist, dessen Lage durch Koordinaten $(\alpha, \beta, \gamma)$ in einem Messkoordinatensystem $(K_M)$ beschrieben wird. Die Daten $(D(\alpha,\beta,\gamma))$ werden als mindestens eine Textur $(T\alpha_i, T\beta_j, T\gamma_k)$ in eine Grafikhardware (4) geladen, um in einem Projektionsraum eine bildliche Darstellung (5) zu erzeugen. Dabei wird das Beleuchtungsmodell (BM) im Messkoordinatensystem $(K_M)$ ausgewertet.

Fig.4

EP 1 473 677 A1

**Beschreibung**

Die Erfindung betrifft ein Verfahren zum Visualisieren eines räumlich aufgelösten Datensatzes unter Verwendung eines Beleuchtungsmodells, sowie die Verwendung dieses Verfahrens zum Generieren dreidimensionaler Darstellungen eines Körpers gemäss dem Oberbegriff des unabhängigen Anspruchs der jeweiligen Kategorie.

Zur Darstellung von drei- und höherdimensionalen Datensätzen bedient man sich häufig zweidimensionaler Projektionen dieser Volumina oder Hypervolumina, welche dann graphisch ausgegeben und vom Betrachter interpretiert werden können. Für den durchaus häufigen Fall, dass das Volumen in karthesicher bzw. isotroper Form vorliegt, und damit die Volumen in einem orthogonalen Raster angeordnet sind, das in allen drei Raumrichtungen dieselbe Auflösung besitzt, verfügen viele Grafikbeschleuniger moderner Datenverarbeitungsanlagen über Hardware, die sich unmittelbar effizient nutzen lässt, um die Volumenvisualisierung durchzuführen. Eine solche Ausstattung mit Grafikbeschleunigern in Form von Grafikkarten ist auch bei handelsüblichen Personalcomputern inzwischen durchgängiger Standard.

Die Visualisierung räumlich aufgelöster Datensätze durch dreidimensionale bildliche Darstellungen, beispielsweise in einer Ebene, gewinnt dabei auf vielen technischen Gebieten zunehmend an Bedeutung. Das betrifft sowohl Animationen, beispielsweise bei Computerspielen oder in der Werbung, als auch den industriellen Bereich und insbesondere die moderne medizinische Diagnostik und Therapie. Hier sind zahlreiche bildgebende Untersuchungsmethoden, wie unter anderen die Computertomographie, die Kernspintomographie oder Verfahren der Ultraschalltechnik bekannt, die, anhand von messtechnisch erfassten Datensätzen, Darstellungen von bestimmten Bereichen des menschlichen Körpers, von Organen, dem inneren von Blutgefässen oder dem Herzen, des menschlichen Schädels usw. geben sollen. Dabei kommt es zunehmend darauf an, sowohl im wesentlichen statische Abbildungen, als auch bewegte Vorgänge möglichst in Echtzeit abzubilden. Das ist zum Beispiel bei der Beobachtung der Bewegung des Herzens mittels eines Katheters oder wenn eine entsprechende Messsonde, z.B. eine Ultraschallsonde, bei einer Operation das Auge des Arztes ersetzen muss, von zentraler Bedeutung. Verwandte bildgebende Verfahren sind natürlich auch aus der industriellen Technik, beispielsweise zur zerstörungsfreien Überprüfung sicherheitsrelevanter Komponenten wie Radund Achsssätze bei Schienenfahrzeugen, Druckbehältern, Rohren und dünnen Leitungen, z.B. in der Kraftwerkstechnik und in vielen anderen Bereichen mehr wohlbekannt.

Darüber hinaus gewinnt die Visualisierung räumlich aufgelöster Datensätze durch dreidimensionale bildliche Darstellungen, insbesondere von Radardaten, Sonardaten (Ortung und Navigation), von seismischen Datensätzen, von Wetterdaten oder beispielsweise die Visualisierung im Rahmen von Finite Elemente Analysen eine immer grössere Bedeutung. Aber auch für Computersimulationen auf den verschiedensten Gebieten, unter anderem im Bereich der Radar-, Ultraschall- und Sonartechnik gibt es zahllose Anwendungen.

Zunehmend wird auch auf eine immer realistischere Darstellung der messtechnisch erfassten und dann projizierten Datensätze Wert gelegt. Das heisst, dass die Tendenz hin zu immer höherer räumlicher Auflösung des zu beobachtenden Objekts geht, wobei es darauf ankommt, den durch eine Messapparatur erfassten, in der Regel dreidimensionalen Datensatz perspektivisch korrekt, beispielsweise auf die zweidimensionale Oberfläche eines Computermonitors zu projizieren, und dem projizierten Volumen in realistischer Weise Lichtreflexe einzuschreiben, um den menschlichen Visus bei der Orientierung in der räumlichen Tiefe in einem dreidimensionalen graphischen Datensatz zu unterstützen. Insbesondere bei stereoskopischen Projektionen, wenn also dem menschlichen Visus durch Überlagerung von zwei in der Perspektive leicht gedrehte Projektionen durch eine geeignete Projektionseinrichtung ein dreidimensionales Bild vermittelt werden soll, ist die Einbeschreibung von Beleuchtungseffekten in die Projektion von besonderer Bedeutung.

Dazu wird ein bestimmtes Beleuchtungsmodell zugrunde gelegt, dass durch sogenannte Beleuchtungsfunktionen beschrieben wird, die die Wechselwirkung von (virtuell) eingestrahltem Licht mit den Objekten im Volumen, einschliesslich Dämpfung, Reflexion und Streuung approximieren. Es liegt auf der Hand, dass dazu enorme Rechenleistungen erforderlich sind, die ohne weiteres auch nicht von den heutzutage auf dem Markt verfügbaren Rechnersystemen erbracht werden.

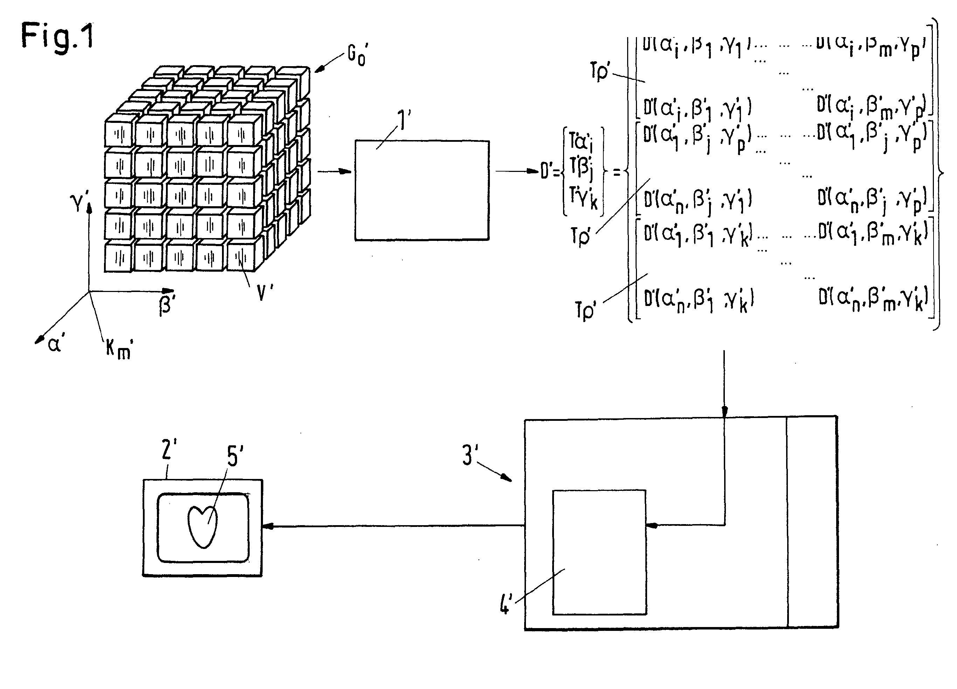

Das aus dem Stand der Technik bekannte Prinzip der Visualisierung mehrdimensionaler graphischer Datensätze mit Hilfe handelsüblicher Graphikhardware unter Berücksichtigung eines bestimmten Beleuchtungsmodells soll im folgenden unter Bezugnahme auf die Fig. 1 bis 3 kurz skizziert werden. Zur Unterscheidung des Stands der Technik von dem erfindungsgemässen Verfahren sind in den Fig. 1 bis 3 die Bezugszeichen mit einem Hochkomma versehen. All den aus dem Stand der Technik bekannten Prinzipien zur Visualisierung von Datensätzen D', die Daten D'($\alpha'$, $\beta'$, $\gamma'$) (gemessen in einem Messkoordinatensystem $K'_m$ mit Koordinatenachsen $\alpha'$, $\beta'$, $\gamma'$ umfassen, ist gemeinsam, dass die Beleuchtungsfunktionen, die das Beleuchtungsmodell definieren, im Projektionsraum P' ausgewertet werden, da dort natürlich der Sehvektor S' des Beobachters bzw. der Beleuchtungsvektor definiert ist. Im Rahmen dieser Anmeldung wird der Vorgang des Berechnens der Beleuchtungsfunktionen in Anlehnung an die Nomenklatur der einschlägigen Literatur als "Shading" bezeichnet. Davon zu unterscheiden ist der im Rahmen dieser Anmeldung als "Rendern" bezeichnete Vorgang. Unter Rendern soll im folgenden die Linearisierung nach Schneiden in einem Originalvolumen bzw. in einem gemessenen Datensatz und das anschliessende Übersetzen der Schnittpunkte in die Geometrie eines Projektionsraumes verstanden werden.

In einem einfachen Fall liegt, wie in Fig. 1 an einem bekannten Beispiel aus dem Stand der Technik schematisch dargestellt, der zu visualisierende Datensatz D', der durch eine entsprechende Vorschrift oder eine Messvorrichtung 1', wie beispielsweise durch einen Kernspintomographen 1' durch Messung in einem Originalvolumen $G_o'$ generiert wurde, in karthesischer oder isotroper Form vor. Das Originalvolumen $G_o'$ hat die Form eines Quaders und die Volumenelemente V' sind in einem orthogonalen Raster angeordnet, das in allen drei Raumachsen $\alpha'$, $\beta'$, $\gamma$ des Messkoordinatensystem $K'_m$ dieselbe Auflösung besitzt. Zur Projektion eines solchen Datensatzes D', beispielsweise auf einem Beobachtungsmonitor 2', wird der Datensatzes D' in eine Datenverarbeitungsanlage 3' geladen. Diese verfügt über handelsübliche Graphikbeschleiniger, die Graphikhardware 4' umfassen, welche sich effizient nutzen lässt, um die Volumenvisualisierung auszuführen.

Hierfür findet häufig das Konzept der Textur Verwendung, wobei die Textur durch einen Datensatz definiert ist, aus dem zweidimensionale polygonale Flächen herauskopiert, also herausgelesen werden können, was der oben erwähnten graphischen Schneideoperation entspricht.

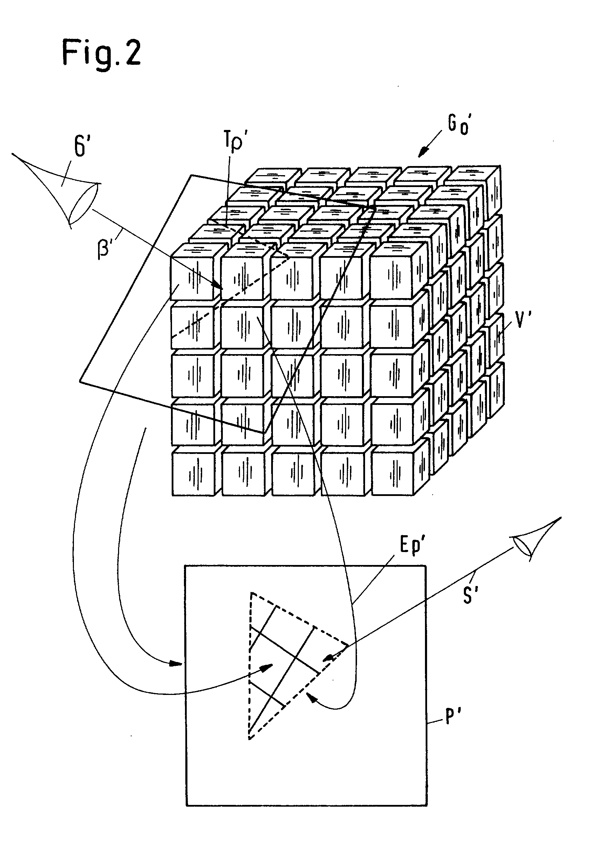

Dazu wird, wie in Fig. 2 schematisch gezeigt, bei der Abbildung eines digitalen Bildes 5' aus dem Orginalvolumen $G_0'$, d.h. aus einem digitalen Datensatz D', ein beliebiges Polygon auf ein anderes Polygon $E_p'$ im Projektionsraum P' abgebildet, wobei das Polygon $T\rho'$ des Originalvolumens $G_o'$ geometrisch nicht ähnlich zu dem Polygon $E_p'$ im Projektionsraum P' zu sein braucht. Wird wie im vorliegenden Beispiel ein Originalvolumunen $G_o'$ durch einen dreidimensionaler Datensatz D', der aus einer oder mehreren 2D- oder 3D-Texturen $T\rho'$ aufgebaut ist, repräsentiert, so wird ein solcher dreidimensionaler Datensatz D' häufig auch als 3D-Textur bezeichnet.

Es versteht sich, dass in einem besonders einfachen Fall die Textur $T\rho'$ identisch mit dem Polygon aus der Schneideoperation sein kann.

Das Originalvolumen $G_o'$, also der Datensatz D', wird beispielsweise senkrecht zu einer Betrachtungsrichtung B' eines (virtuellen) Betrachters 6', in eine bestimmte Zahl von Texturen $T\rho'$ unterteilt, deren Ecken dann in die Betrachtungsposition gedreht, perspektivisch entzerrt und dargestellt werden. Diese Darstellung des Originalvolumens $G_o'$ als zweidimensionale Projektion wird durch wiederholtes "Schneiden" des Originalvolumens $G_o'$, d.h. des dreidimensionalen Datensatzes D' senkrecht zur Betrachtungsrichtung 6' erreicht. Das Schneiden besteht dabei darin, dass die Werte aus dem Datensatz D' interpoliert und in eine Projektionsebene, die in dem vorliegenden Fall mit dem Projektionsraum P' identisch ist, projiziert werden.

Die Menge der Schnitte, die hier zweidimensionale Bilder sind, müssen dann durch eine Integrationsvorschrift zu einem einzigen Bild 5' zusammengefügt werden. Die Integrationsvorschrift kann dabei eine simple punktweise Summation sein, oder durch eine bestimmte Vorschrift, die oft auch als Beleuchtungsfunktion bezeichnet wird, im Rahmen eines sogenannten Beleuchtungsmodells erfolgen. Die Beleuchtungsfunktionen, bzw. die Beleuchtungsmodelle berücksichtigen also durch den Vorgang des Shadings approximativ die Wechselwirkung von (real oder virtuell) eingestrahltem Licht, einschliesslich Dämpfung, Reflexion und Streuung, mit den Objekten des Originalvolumens $G_o'$, also dem dreidimensionalen Datensatz D'.

Soll eine stereoskopische Projektion erreicht werden, muss das zuvor geschilderte Verfahren zusätzlich noch in Bezug auf mindestens einen zweiten Sehvektor, dessen Richtung vom Sehvektor S' leicht verschieden ist, durchgeführt und einer geeigneten stereoskopischen Projektionseinrichtung zugeführt werden. D.h., für jedes Auge muss entsprechend seiner Position eine Ansicht berechnet werden.

Die Literatur der Volumenvisualisierung kennt dabei zahlreiche Ansätze, wie einem zu visualisierenden Datensatz D' optische Eigenschaften zugeschrieben werden können. Die bekannteste Klasse solcher Verfahren betrachtet die Intensität als eine Form der optischen Dichte, so dass Dichteschwankungen Lichtstreuung und Reflexion verursachen und die Dichte selbst lichtabsorbierend wird. In der Literatur werden Algorithmen, die auf dieser Hypothese beruhen, pauschal als Gradientenrenderer bezeichnet.

Natürlicherweise wertet man die Beleuchtungsfunktionen im Projektionsraum P' aus, da dort der Sehvektor S' und der Beleuchtungsvektor definiert sind. Das heisst, das Originalvolumen $G_o'$ (also der Datensatz D') wird zunächst in Ebenen geschnitten, d.h. in Texturen $T\rho'$ zerlegt, und in den Projektionsraum P' abgebildet, ein Vorgang der auch als Texturremapping in der Literatur bezeichnet wird. Anschliessend werden im Projektionsraum P' die Beleuchtungsfunktionen ausgewertet, das heisst, auf die projizierten (also gedrehten und entzerrten) Texturen $T\rho'$ im Projektionsraum P' angewendet.

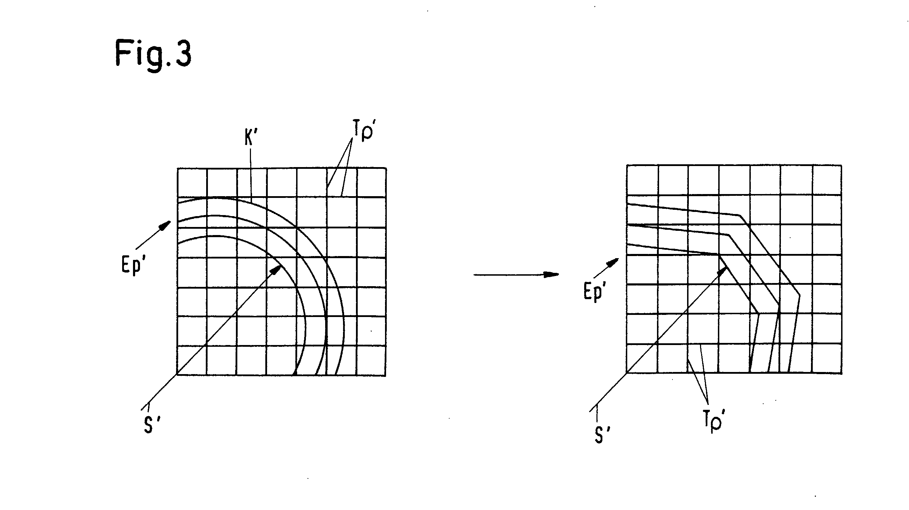

Dieses aus dem Stand der Technik bekannte Verfahren ist einerseits deshalb nachteilig, weil der Sehvektor S' bzw. der Beleuchtungsvektor weder auf den ebenen Texturen $T\rho'$ des Originalvolumens $G_o'$ noch auf den projizierten Ebenen $E_p'$ im Projektionsraum P' einen konstanten Betrag haben; vielmehr ist der Betrag des Sehvektors, wie im linken Bild von Fig. 3 schematisch dargestellt, auf Kugelschalen K' konstant. Somit ändert sich der Sehvektor S' und der Beleuchtungsvektor im allgemeinen über einen Schnitt, d.h. über eine ebene Textur $T\rho'$ bzw. über eine Ebene $E_p'$ im Projektionsraum P'.

Daher bilden die Ebenen, die durch Sehvektoren S' mit konstantem Betrag gekennzeichnet sind, im Original-

volumen $G_0$ konzentrische Kugelschalen K'. Weil somit betragsmässige Änderungen des Sehvektors S' nicht linear von den Texturkoordinaten der Texturen $T\rho'$, bzw. der projizierten Ebenen $E_p'$ abhängen, können diese auch nicht auf der Graphikhardware 4' unmittelbar kodiert werden. Daher muss bei den aus dem Stand der Technik bekannten Verfahren die projizierte Ebene $E_p'$ im Projektionsraum P', wie im rechten Bild der Fig. 3 schematisch dargestellt, in kleinere Flächen zerlegt werden, wobei zwischen den Eckpunkten der Teilflächen linear interpoliert wird.

Neben verschiedenen Nachteilen, wie Erhöhung der benötigten Rechenzeit, liegt ein besonders gravierender Nachteil darin, dass durch die zuvor beschriebene Interpolation im Projektionsraum P' zwangsläufig Linearisierungsfehler auftauchen.

Während die zuvor erwähnten Linearisierungsfehler bei der Abbildung eines im wesentlichen karthesischen und isotropen Originalvolumens $G_o'$, also eines karthesischen Datensatzes D', sich in manchen Fällen noch in einem vertretbaren Rahmen bewegen, werden die Linearisierungsfehler bei nicht karthesischen Datensätzen D' unvertretbar hoch, so dass entweder keine brauchbare Abbildung im Projektionsraum P' entsteht oder der Rechenaufwand steigt so dramatisch an, dass Echtzeitabbildungen, wie sie beispielsweise in der medizinischen Technik häufig unerlässlich sind, mit den aus dem Stand der Technik bekannten Projektionsverfahren und der derzeitig verfügbaren Hardware nicht mehr möglich sind. Es versteht sich, dass durch eine zusätzliche Auswertung der Beleuchtungsfunktionen im Projektionsraum P' der Rechenaufwand nochmals dramatisch steigt und bei stereoskopischer Projektion noch weiter erhöht wird.

Dabei liegen gerade bei vielen für die Praxis wichtigen Anwendungen die Datensätze D', die im Originalvolumen $G_o'$ gewonnen wurden, eben nicht in karthesischen, d.h. in rechtwinkligen Koordinaten vor. Das hat seine Ursache in erster Linie in der Art der Datenaquisition. Typische Beispiele sind die (Röntgen) Computertomography oder spezielle Ultraschalltechniken, bei welchen die zu projizierenden Datensätze D' beispielsweise in Zylinderkoordinaten vorliegen. Bei der Verwendung sehr moderner Abtastsysteme ist somit die relativ lange Zeit, die zur Erstellung einer dreidimensionalen Abbildung im Projektionsraum P' mit den bekannten Verfahren aus dem Stand der Technik benötigt wird, weniger durch die Datenaquisition als solche, also die Erstellung des Datensatzes D' an sich verursacht, sondern vielmehr durch den Vorgang der Visualisierung des Datensatzes D'. So sind bereits sehr schnell abtastende Ultraschallsonden bekannt, mit denen ein interessierendes Originalvolumen $G_o'$ in mehreren Ebenen gleichzeitig und kreisförmig abgetastet wird. Solche Ultraschallsonden umfassen beispielsweise mehrere, um eine Achse schwenkbare oder rotierbare, linear oder allgemein in einem Array angeordnete Ultraschallwandler, von denen einige oder alle parallel betrieben werden, so dass ein gleichzeitiges zylindersymmetrisches Abtasten in mehreren Ebenen simultan ermöglicht wird. Sehr häufig sind solche schnell abtastenden Untraschallsonden allein schon aus Effizienzgründen nicht in der Lage, das Volumen karthesisch zu vermessen.

Die so gewonnen Datensätze D' liegen somit in einer Zylindersymmetrie vor und können nicht unmittelbar auf herkömmlich verfügbarer Graphikhardware kodiert werden. Wenn eine schnelle Visualisierung der Datensätze D' notwendig ist, um beispielsweise eine Echtzeitdarstellung bei Videofrequenzen mit typischen Bildlaufzeiten von weniger als 1/25 Sekunde zu erreichen, verbieten sich prinzipiell komplizierte und zeitaufwendige Rechenoperationen zur Aufbereitung der gemessenen Datensätze D' für die Verarbeitung in der Graphikhardware 4'. Somit scheidet insbesondere eine aufwendige Koordinatentransformation in ein karthesisches Koordinatensystem aus.

Zur Lösung dieses Problems wird in der EP 1 059 612 A1 ein Verfahren zum Visualisieren eines räumlich aufgelösten Datensatzes D' angegeben, dass es durch Vermeidung aufwendiger Teilschritte auf besonders effiziente Weise erlaubt, auch nicht karthesische Datensätze D' auf allgemein verfügbarer Graphikhardware 4', wie sie beispielsweise in handelsüblichen Personalcomputern zum Einsatz kommt, enorm schnell zu verarbeiten und so dreidimensionale Darstellungen, selbst von bewegten Objekten, in Echtzeit, d.h. bei typischen Videofrequenzen, zu projizieren und darzustellen. Das vorgenannte Verfahren ist in der EP 1 059 612 A1, deren Inhalt hiermit in diese Anmeldung aufgenommen wird, eingehend beschrieben und braucht daher nicht mehr im Detail erläutert zu werden.

Das in der EP 1 059 612 A1 vorgeschlagene Verfahren erlaubt es zwar auf besonders elegante und effiziente Weise mehrdimensionale Datensätze D', die in beliebigen krummlinigen Koordinaten, z.B. in Zylinder- oder Kugelsymmetrie vorliegen, ohne grossen Rechenaufwand und enorm schnell auf gewöhnlicher Graphikhardware unmittelbar zu kodieren. Das Problem der schnellen und effizienten Auswertung der Beleuchtungsfunktionen bleibt jedoch unberührt.

Ausgehend von diesem Stand der Technik ist es daher eine Aufgabe der Erfindung, ein Verfahren zum Visualisieren eines räumlich aufgelösten Datensatzes bereitzustellen, das es auf besonders effiziente Art erlaubt die Beleuchtungsfunktionen auszuwerten, wobei die benötigte Rechenzeit im Vergleich zu Verfahren aus dem Stand der Technik enorm reduziert wird.

Die diese Aufgabe lösenden Gegenstände der Erfindung sind durch die Merkmale des unabhängigen Anspruchs der jeweiligen Kategorie gekennzeichnet.

Die abhängigen Ansprüche beziehen sich auf besonders vorteilhafte Ausführungsformen der Erfindung.

Erfindungsgemäss wird somit ein Verfahren zum Visualisieren eines räumlich aufgelösten Datensatzes unter Verwendung eines Beleuchtungsmodells vorgeschlagen, wobei ein Datum des Datensatzes jeweils einem Volumenelement zugeordnet ist, dessen Lage durch Koordinaten in einem Messkoordinatensystem beschrieben wird. Die Daten werden als mindestens eine Textur in eine Grafikhardware geladen, um in einem Projektionsraum eine bildliche Darstellung zu erzeugen. Dabei wird das Beleuchtungsmodell im Messkoordinatensystem ausgewertet.

Wesentlich für die Erfindung ist es somit, dass ein für die Visualisierung des Datensatzes zugrunde gelegtes Beleuchtungsmodell bzw. die das Beleuchtungsmodell definierenden Beleuchtungsfunktionen im Messkoordinatensystem des Orginalvolumens ausgewertet werden. Das heisst, der Vorgangs des Shadings findet vollständig im Originalvolumen statt und ist vom Vorgang des Renderns, wie er eingangs definiert wurde, vollständig getrennt.

Bevorzugt werden dabei die Daten des Datensatzes, die in einer Messung, beispielsweise einer Messung mittels einer Ultraschallsonde am Herzen, generiert wurden, ohne Transformation aus dem Messkoordinatensystem in ein anderes Koordinatensystem, insbesondere ohne Transformation in ein karthesisches und / oder isotropes Koordinatensystem, verarbeitet. Das heisst, bei Anwendung des erfindungsgemässen Verfahrens, bei welchem die Beleuchtungsfunktionen im Messkoordinatensystem ausgewertet werden, werden die Daten durch elementare Rechenoperationen so aufbereitet, dass sie ohne Koordinatentransformation in die Grafikhardware geladen und von dieser verarbeitet werden können.

Bevorzugt kommt das erfindungsgemässe Verfahren in einer Ausführungsvariante zum Einsatz, bei dem das Messkoordinatensystem ein nicht-karthesisches Messkoordinatensystem ist. Im speziellen kann das Messkoordinatensystem ein Zylinder- oder Kugelkoordinatensystem oder ein anderes nicht-karthesisches Koordinatensystem sein. So können die Daten beispielsweise mittels einer sehr schnell abtastenden, rotierenden Ultraschallsonde generiert werden. Mit solchen Ultraschallsonden ist es möglich ein interessierendes Originalvolumen, beispielsweise das Innere eines menschlichen Herzens, in mehreren Ebenen gleichzeitig und kreisförmig abzutasten. Solche Ultraschallsonden können mehrere, um eine Achse schwenkbare oder rotierbare, linear oder allgemein in einem Array angeordnete Ultraschallwandler umfassen, von denen einige parallel betrieben werden, so dass ein gleichzeitiges zylindersymmetrisches Abtasten in mehreren Ebenen ermöglicht wird. Somit besitzt das Messkoordinatensystem, in dem die Daten des Datensatzes vorliegen, ebenfalls Zylindersymmetrie.

Es versteht sich, dass das erfindungsgemässe Verfahren in einer speziellen Ausführungsvariante auch vorteilhaft auf Daten eines karthesischen Datensatzes angewendet werden kann. Somit ist das erfindungsgemässe Verfahren keineswegs auf nicht-karthesische Messkoordinatensysteme beschränkt.

In einem für die Praxis wichtigen Ausführungsbeispiel des erfindungsgemässen Verfahrens, wird zwischen den Daten des Datensatzes im Messkoordinatensystem linear interpoliert. Dadurch können die Daten ohne Durchführung einer Koordinatentransformation in ein karthesisches System in die Grafikhardware geladen und von dieser verarbeitet werden.

Nicht zuletzt dadurch, dass die Daten des Messdatensatzes, die in einem krummlinigen, nicht-karhtesischen Messkoordinatensystem vorliegen können, beispielweise in Zylinderkoordinaten oder in Kugelkoordinaten, in einer für die Praxis sehr wichtigen Ausführungsvariante des erfindungsgemässen Verfahrens ohne vorherige Koordinatentransformation in die Grafikhardware geladen und von dieser verarbeitet werden können, können die Daten des Datensatzes auch nahe einer Singularität ausgewertet werden. Solche Singularitäten findet man beispielsweise in Zylinderkoordinaten, die durch eine Koordinate, die einem Radius entspricht, eine Winkelkoordinate und eine weitere Raumkoordinate beschrieben werden können, bei einem Wert des Radius von Null. Das heisst unter der Aussage bei "Radius Null liegt eine Singularität vor" ist zu verstehen, dass die Daten in einem Messkoordinatensystem mit Zylindersymmetrie in der Nähe bzw. exakt bei Punkten mit einem Wert der Radius-Koordinate von Null nicht durch eine Koordinatentransformation auswertbar sind. Da jedoch in der oben beschriebenen Ausführungsvariante keine Koordinatentransformation stattfindet, können durch Anwendung dieser Ausführungsvariante des erfindungsgemässen Verfahrens auch Daten des Datensatzes nahe einer Singularität ausgewertet werden. Selbstverständlich ist das erfindungsgemässe Verfahren grundsätzlich auch anwendbar, wenn die Daten des Datensatzes, insbesondere zur Weiterverarbeitung in der Grafikhardware, einer Koordinatentransformation unterzogen werden.

Insbesondere können die Daten des Datensatzes in einer weiteren Variante des erfindungsgemässen Verfahrens eine volumenaufgelöste Abtastung eines Körpers, zum Beispiel eines Teils eines menschlichen Körpers repräsentieren, so dass die bildliche Darstellung eine dreidimensionale Volumendarstellung, insbesondere unter anderem auch eine semi-transparente Darstellung des Körpers ist. Solche Darstellungen sind unter anderem dann von Vorteil, wenn sich der Betrachter im Volumen des dargestellten Körpers orientieren muss und / oder wenn der Körper oder Teile des dargestellten Körpers gewissen Bewegungsabläufen unterliegt. So kann das Verfahren unter anderem zur Beobachtung eines schlagenden Herzens oder bei einer Operation am schlagenden Herzen, zum Beispiel unter Verwendung einer Ultraschallmesseinrichtung, besonders vorteilhaft eingesetzt werden. Da es durch Einsatz des erfindungsgemässen Verfahrens möglich ist, enorm schnell dreidimensionale Darstellungen mit Hilfe einer gewöhnlichen Grafikhardware zu generieren, sind dreidimensionale Abbildungen von sehr hoher Auflösung in Echtzeit möglich, auch mit Videofrequenzen mit Bildlaufzeiten von typischerweise 1/25 Sekunden.

Selbstverständlich ist es durch Einsatz des erfindungsgemässen Verfahrens, bzw. durch Einsatz einer oder mehrerer, d.h. durch geeignete Kombination der zuvor geschilderten Ausführungsvarianten auch möglich, die bildliche Darstellung als stereoskopische Projektion zu erzeugen. Insbesondere bei solchen stereoskopischen Projektionen, wenn also dem menschlichen Visus durch Überlagerung von zwei in der Perspektive leicht verschobenen Projektionen durch eine geeignete Projektionseinrichtung ein dreidimensionales Bild vermittelt werden soll, ist die Einbeschreibung von Beleuchtungseffekten in die Projektion von besonderer Bedeutung. Da die verschiedenen Ausführungsvarianten des erfindungsgemässen Verfahrens eine enorm schnelle Verarbeitung der Bilddaten, d.h. insbesondere eine enorm schnelle und effiziente Auswertung der Beleuchtungsfunktionen im Messkoordinatensystem erlauben, sind selbst stereoskopische Projektionen, eventuell unter Zuhilfenahme geeigneter Projektionsvorrichtungen, wie z.B. geeigneter 3D-Brillen, sogar von Bewegungsabläufen in Echtzeit und mit extrem hoher Auflösung möglich.

Somit eignet sich das Verfahren in seinen verschiedenen Ausführungsvarianten insbesondere zur Verwendung für medizinische Zwecke, zum schnellen Generieren dreidimensionaler Darstellungen eines Körpers, insbesondere eines menschlichen Körpers oder Teilen davon, anhand von messtechnisch gewonnenen Daten.

Es versteht sich, dass auch jede geeignete Kombination der zuvor dargestellten Ausführungsvarianten vorteilhaft einsetzbar ist und darüber hinaus das Verfahren nicht nur für medizinische Zwecke, sondern ganz allgemein auch in der industriellen Technik, z.B. zur Untersuchung schwer zugänglicher Bereiche einer Anlage, hervorragend geeignet ist. Insbesondere müssen die Daten des zu visualisierenden Datensatzes nicht unbedingt durch eine messtechnische Einrichtung, wie beispielsweise eine Ultraschallsonde generiert werden, sondern können beispielsweise auch durch eine mathematische Vorschrift, eine Simulation oder anders zur Verfügung gestellt werden.

Bevor die Erfindung anhand der Zeichnung näher erläutert wird, sollen zum besseren Verständnis des vorliegenden Anmeldetextes die für die Erfindung wesentlichen mathematischen Grundlagen zur Visualsierung eines räumlich aufgelösten, insbesondere eines nicht-karthesischen Datensatzes erläutert werden.

Da bei einer Abbildung Ebenen des Originalvolumens, wegen der Perspektive, nicht in Ebenen sondern in Kugelschalen im Projektionsraum abgebildet werden, ändern sich der Sehvektor und der Beleuchtungsvektor über einen projizierten Schnitt. Weil diese Änderung nicht linear, bestenfalls näherungseise von den Koordinaten der Textur abhängen, kann sie nicht als Texturoperation auf der Hardware codiert werden. Daher wird die Textur im in kleinere Teilflächen zerlegt und zwischen den Eckpunkten der Teilflächen wird linear interpoliert. Die Eckpunkte dieser Teilflächen werden auch als Vertices bezeichnet. Eine solche Zerlegung in kleinere Teilflächen wird im Rahmen dieser Anmeldung als Tesselierung bezeichnet. Dabei findet die Tesselierung im Originalvolumen statt. Das Originalvolumen wird in konzentrische Kugelschalen geschnitten, so dass der Betrag des Betrachtungsvektor auf einer gegeben Textur, die einer herausgeschnittenen Kugelschale entspricht, konstant bleibt, so dass der Betrachtungsvektor nicht entzerrt werden muss. Dadurch werden die üblicherweise auftretenden Auflösungsverluste durch die Entzerroperationen minimiert. Die Geometrie wird also im ursprünglichen Originalvolumen linearisiert, in dem erfindungsgemäss auch die Beleuchtungsfunktionen ausgewertet werden.

Der maximale Fehler, welcher durch eine Tesslierung mit Winkelinkrementen von kleinen Winkeln $\alpha$ bei einem Betrachtungsradius r entsteht ist

$$err = r\left(1 - \cos\left(\frac{\alpha}{2}\right)\right) \approx r\frac{\alpha^2}{4} \text{ (eq. 1).}$$

In Masseinheiten von Pixeln, ergibt sich so eine Obergrenze für das Inkrement bei einem Fehler von

$$err \leq \frac{1}{2} \text{ als: } \alpha \leq \sqrt{\frac{2}{r}} \, ,$$

für r = 200 also etwa 6 Grad. Dieser Fehler ist in karthesischen Volumina teilweise tolerierbar - in krummlinigen Koordinaten, wie beispielsweise in Systeme mit sphärischer oder zylindrischer Symmetrie, völlig unvertretbar gross.

Einen Ausweg bildet das sogenannte "Innere Shading" gemäss der vorliegenden Erfindung, dessen mathematische Grundlagen im folgenden näher erläutert werden. Beim inneren Shading wird die Geometrie des Originalvolumens in ihren nicht-kartesischen Koordinaten linearisiert und die Vertices in die Geometrie des Projektionsraumes übersetzt. Die Betrachtungs- und Beleuchtungsvektoren werden im Originalvolumen ausgewertet und die Beleuchtungsfunktionen werden so umgeformt, dass sie im Originalvolumen gelten. Somit findet das Shading vollständig im Originalvolumen statt, woraus sich die Bezeichnung "Inneres Shading" herleitet.

Die Schritte Shaden und Rendern sind somit gemäss der vorliegenden Erfindung vollständig getrennt. Das Originalvolumen wird zuerst zumindest elementweise geshadet und dann über Texturschnitte gerendert. Wird das gesamte Originalvolumen zunächst vollständig geshadet und dann erst gerendert, spricht man bei dieser speziellen Implementation auch von einem "zweistufigen Inneren Shading".

Um das Verfahren zu implementieren, müssen die Tesselierung und die Form der Beleuchtungsfunktionen im Originalvolumen angeben werden. Die drei Koordinaten im Originalvolumen werden mit $(\alpha,\beta,\gamma)$ bezeichnet und jene des kartesischen Projektionsraumes als (x,y,z). Die Transformation T zwischen den Systemen sei (x,y,z)= $T(\alpha,\beta,\gamma)$ - T ist i.a. kein linearer Operator, sein Inverses $T^{-1}$ muss jedoch bis auf die Singularitäten existieren. Die entsprechenden linearen Operatoren werden wie folgt benannt:

$$x = T_x(\alpha,\beta,\gamma), \; y = T_y(\alpha,\beta,\gamma) \; \text{und} \; z = T_z(\alpha,\beta,\gamma).$$

Im Falle von Kugelkoordinaten sind $(\alpha,\beta,\gamma) = (r,\phi,\varphi)$ und $x = r \cdot \cos(\varphi)\cos(\phi)$, $y = r \cdot \cos(\varphi)\sin(\phi)$ und $z = r \cdot \sin(\varphi)$, für Zylinderkoordinaten kann man $(\alpha, \beta, \gamma) = (r, \phi, z)$ verwenden und erhält $x = r \cdot \cos(\phi)$, $y = r \cdot \sin(\phi)$ und $z = z$.

Es ist aus der Literatur bekannt, dass ein Gradient in einen Beleuchtungswert überführt werden kann, indem er als Zeiger in ein Datenfeld benutzt wird, welches auf den Seitenflächen des Einheitswürfels angeordnet ist. Die Werte des Shadings werden also anhand der Vektoren der Betrachtung und der Beleuchtung tabelliert und dann in einer Tabelle, Cubemap genannt, abgelegt. Das reduziert das Problem darauf zu zeigen, dass das Shading in Abhängigkeit des Gradienten im Ursprungsvolumen tabelliert werden kann.

Dies ist trivialerweise gegeben - beim Füllen der Cubemap entspricht der Gradientenvektor dem Vektor vom Ursprung an die zu berechnende Position in der Cubemap, dieser Vektor $n_{(0)}$ ist in $G_0$ gegeben, er kann also punktweise mittels T in den Projektionsraum überführt werden:

$$n_{(p)}(x_p) := \frac{dT}{dn_{(0)}}(x_0) \; \text{(eq. 2)}.$$

Dessen Beleuchtungsfunktion ist dann berechenbar.

Es gilt die Definition $x_p := T(x_0)$, wobei $\frac{dT}{dn}(x)$ die Richtungsableitung von T in der Richtung von n an der Stelle x ist. Da sowohl T als auch $\frac{dT}{dn}$ i.a. nicht-linear sind muss die Cubemap nicht nur für jeden Knoten der Tesselierung neu berechnet werden, sondern sie kann auch zwischen den Punkten nicht korrekt interpoliert werden. Dieser allgemeine Ansatz ist also für krummlinige Koordinaten nicht gangbar.

Im folgenden soll gezeigt werden, dass die Shading Werte mittels den vier elementaren Rechenoperationen aus den Gradienten des Ursprungsvolumens gewonnen werden können. Dies ist wegen der Allgemeinheit der Transformation T nur als Näherung denkbar, die nachstehend angeben wird.

Hierzu werden im Originalvolumen zwei Vertices $\vec{x}_0$ und $\vec{x}_1$ der Tesselierung, zwischen denen alle Funktionen linear interpoliert werden sollen, betrachtet. Die kartesischen Gradienten $\vec{g}_i := \nabla(T(V(\vec{x}_i)))$ für jedes i können per Hardware in Beleuchtungswerte umgerechnet werden. Es stehen jedoch nur die Gradienten $\vec{g}_{0i} := \nabla(V(\vec{x}_i))$ zur Verfügung, die gemäss der Erfindung nicht durch eine Rotation überführt werden sollen.

Daher müssen zunächst die Normalen durch das Differenzial von T hergeleitet werden: eine Normalkomponente g in Richtung $\alpha$ an der Koordinate $\vec{x}_0 = (\alpha,\beta,\gamma)$ wird dann im Projektionsraum durch $g \cdot \frac{\partial T}{\partial \alpha}(\vec{x}_0)$ ausgedrückt. Weil die Richtungsvektoren lokal definiert und differenzierbar sind, können sie linear transformiert werden, und es kann die Übergangsmatrix $G_O \rightarrow G_P$ (Ursprungsvolumen nach Projektionsraum) der Normalenvektoren im Punkt $\vec{x}_0$ angeben werden:

$$N := \begin{pmatrix} \frac{\partial T_x}{\partial \alpha} & \frac{\partial T_x}{\partial \beta} & \frac{\partial T_x}{\partial \gamma} \\ \frac{\partial T_y}{\partial \alpha} & \frac{\partial T_y}{\partial \beta} & \frac{\partial T_y}{\partial \gamma} \\ \frac{\partial T_z}{\partial \alpha} & \frac{\partial T_z}{\partial \beta} & \frac{\partial T_z}{\partial \gamma} \end{pmatrix}.$$

Dies zeigt, dass das Shading von nicht-karthesischen Datensätzen konventionell durchführbar ist, jedoch erst nach der Übersetzung in den Projektionsraum.

Daher werden die Betrachtungen im weiteren auf eine Abwandlung einer Basis

$$\mathbf{e_G} := \left( \frac{\partial T}{\partial \alpha}, \frac{\partial T}{\partial \beta}, \frac{\partial T}{\partial \gamma} \right)$$

des Projektionsraumes beschränkt. In $e_G$ hat N die Form der Einheitsmatrix. Die zugehörige Basis

$$\mathbf{e_N} := \left( \frac{\frac{\partial T}{\partial \alpha}}{\left\| \frac{\partial T}{\partial \alpha} \right\|}, \frac{\frac{\partial T}{\partial \beta}}{\left\| \frac{\partial T}{\partial \beta} \right\|}, \frac{\frac{\partial T}{\partial \gamma}}{\left\| \frac{\partial T}{\partial \gamma} \right\|} \right)$$

ist orthonormal, wenn das Originalvolumen $G_0$ lokal orthogonal ist - was bei zylindrischen und sphärischen Koordinatensystemen der Fall ist - und daher durch Drehung der Standardbasis des Projektionsvolumens $G_P$ zu erzeugen. N ist in $e_N$ eine Diagonalmatrix mit den Elementen

$$\left\{ q_\alpha, q_\beta, q_\gamma \right\} \text{ mit } q_\alpha := \left\| \frac{\partial T}{\partial \alpha} \right\|,$$

$$q_\beta := \left\| \frac{\partial T}{\partial \beta} \right\|, \quad q_\gamma := \left\| \frac{\partial T}{\partial \gamma} \right\|.$$

Dies beweist, dass für lokal orthogonale Systeme der Gradient in $G_0$ einem karthesischen Gradienten entspricht, welcher durch $N^{-1}$ transformiert wurde. Und $N^{-1}$ ist die Diagonalmatrix mit den Kehrwerten dieser q's. Es kann also unmittelbar der Gradient in $G_0$ verwendet werden, nachdem er komponentenweise mit den Kehrwerten der q's skaliert wurde. Damit ist bereits eine mögliche Implementation des Shadings in $G_0$ aufgezeigt.

Es sollen jedoch noch weitere Eigenschaften des Shadings ausgebeutet werden, so dass eine effizientere Implementierung angegeben werden kann, welche auch für nicht-orthogonale Systeme gilt, welche "windschiefe" Basisvektoren besitzen. Solche Systeme können beispielweise von sogenannten Array Scannern erzeugt werden. Da im Stand der Technik nie die Gradienten selbst verwendet werden, sondern alle Beleuchtungswerte aus den Skalarprodukten

$$\left( \bar{g}, \bar{l} \right), \ \left( \bar{g}, \bar{v} \right) \text{ und } \left( \bar{v}, \bar{l} \right)$$

und einer optionalen Skalierung mit $\| \vec{g} \|$ erzeugt werden, ergeben sich hier Möglichkeiten zur Einsparung.

Hierzu müssen die Gleichungen lediglich im Originalvolumen in eine geeignete Form gebracht werden. Die einfache Forderung lautet dann

$$\left( \bar{g}_i, \bar{l} \right) = \left( \bar{g}_{0i}, \bar{l}_0 \right) \text{ (eq. 3)}$$

etc., also die Invarianz der Skalarprodukte. Diese Forderung ist trivialerweise erfüllbar, indem dasselbe Euklidische Skalarprodukt verwendet wird, welches basisunabhängig ist. Dies ist aber kein gangbarer Weg, weil ein solches Skalarprodukt aufwendig zu berechnen ist. Das Kriterium für den Lösungsansatz ist einfach: g soll nicht transformiert werden, weil für jeden Pixel ein g anfällt, g und v werden jedoch nur in jedem Vertex ausgewertet. Es müssen also

$$\left( \bar{g}_i, \bar{l} \right)_P = \left( \bar{g}_{0i}, S\!\left( \bar{l}_0 \right) \right)_O \text{ (eq. 4)}$$

zur Verfügung gestellt werden, mit einem basisabhängigen Standardskalarprodukt für das Originalvolumen und den Projektionsraum. Im weiteren wird

$$\vec{b}\,' := S(\vec{b})$$

explizit hergeleitet. Im betrachteten Punkt x im Ursprungsvolumen $G_0$ seien die Koordinaten der Vektoren durch die Basis $e := \{\vec{e}_\alpha, \vec{e}_\beta, \vec{e}_\gamma\}$ gegeben, also $\vec{g} := g_\alpha \vec{e}_\alpha + g_\beta \vec{e}_\beta + g_\gamma \vec{e}_\gamma$ und $\vec{l} := l_\alpha \vec{e}_\alpha + l_\beta \vec{e}_\beta + l_\gamma \vec{e}_\gamma$. Betrachtet man die Skalarprodukte der Basis

$$c_{ij} := \left(\vec{e}_i \middle| \vec{e}_j\right),$$

dann ist $c_{ii} = 1$, aber i.a $c_{ij} \neq 0$ für die nicht-orthogonalen Basen. Ausgeschrieben lauten die Skalarprodukte:

$$\left(\vec{g}, \vec{l}\right) = g_\alpha l_\alpha + g_\beta l_\beta + g_\gamma l_\gamma + g_\alpha l_\beta c_{\alpha\beta} + g_\alpha l_\gamma c_{\alpha\gamma} + g_\beta l_\alpha c_{\alpha\beta} + g_\beta l_\gamma c_{\beta\gamma} + g_\gamma l_\alpha c_{\alpha\gamma} + g_\gamma l_\beta c_{\beta\gamma} \quad (eq.\ 5)$$

wobei bei orthonormaler Basis e nur die ersten drei Terme existierten.

Gruppiert man den Ausdruck in (eq. 5) nach den Komponenten von g:

$$\left(\vec{g}, \vec{l}\right) = g_\alpha \left(l_\alpha + l_\beta c_{\alpha\beta} + l_\gamma c_{\alpha\gamma}\right) + g_\beta \left(l_\beta + l_\alpha c_{\alpha\beta} + l_\gamma c_{\beta\gamma}\right) + g_\gamma \left(l_\gamma + l_\alpha c_{\alpha\gamma} + l_\beta c_{\beta\gamma}\right) \quad (eq.\ 6),$$

erkennt man (eq 6) als Standardskalarprodukt mit einem neuen Vektor l' mit den Komponenten

$$S(l) = \left(l_\alpha + l_\beta c_{\alpha\beta} + l_\gamma c_{\alpha\gamma}, l_\beta + l_\alpha c_{\alpha\beta} + l_\gamma c_{\beta\gamma}, l_\gamma + l_\alpha c_{\alpha\gamma} + l_\beta c_{\beta\gamma}\right) \quad (eq.\ 7).$$

Mit S(l) steht also eine universale Transformationsvorschrift für die Vektoren l und v zur Verfügung. Diesen neuen l' und v' darf man keine wirkliche geometrische Bedeutung zuschreiben, ausser dass sie die Skalarprodukte im Originalvolumen $G_0$ invariant erhalten.

Damit steht eine sehr einfache Vorschrift von minimalem Rechenaufwand zur Verfügung, welche das Berechnen der Skalarprodukte im Originalvolumen $G_0$ auf dieselbe Art wie im karthesischen Projektionsraum erlaubt, ohne dass T hierzu ausgewertet werden müsste. Die "c"s sind ihrerseits Skalarprodukte der lokalen Basen, werden für die meisten Systeme - auch für nicht orthogonale - jedoch globale Konstanten sein, und daher keinerlei Rechenaufwand konsumieren.

I und v werden in $\vec{x}_0$ und $\vec{x}_1$ und dazwischen vom Grafikprozessor linear interpoliert, die "g"s hingegen werden in jedem Pixel berechnet und nicht nur in den Vertices. Der durch die Linearisierung eingeführte Fehler existiert beim kartesischen Rendern ebenfalls, da der Sehvektor über das Sehfeld schwenkt, das Schwenken aber als lineare Operation angenommen wird.

Dennoch ist der Fehler der Interpolation, der allgemeinen Abbildung T wegen, viel komplexer als im karthesischen Fall: der Beleuchtungsvektor I und der Betrachtervektor v sind beides Richtungsvektoren, welche durch Normierung in einem Punkt x erzeugt werden

$$v := \frac{x - x_v}{\|x - x_v\|} \quad (eq.\ 8)$$

mit $x_v$ der Betrachterposition. Um die einfachst mögliche Form der Richtungsvektoren zu erhalten, verwenden wir (eq. 7).

Somit herrschen in $G_0$ dieselben Bedingungen wie in karthesischen Systemen. Da (eq 3) in $G_0$ linear ist, kommt die Nichtlinearität einzig vom Nenner von (eq. 8). Für eine "hinreichend feine" Tesselierung in dem Sinne, dass sich der Nenner von (eq. 8) monoton entwickelt, kann der Fehler der Linearsierung durch die Kehrwertfunktion abgeschätzt werden:

$$e(t) := Q\left[\left[t \cdot \frac{1}{d_0} + (1-t) \cdot \frac{1}{d_1}\right] - \left[\frac{1}{t \cdot d_0 + (1-t) \cdot d_1}\right]\right] \text{ (eq. 9).}$$

$t \in [0..1]$ ist der Interpolationsparameter und die "d"s stehen für die Nenner in den Vertices, und Q ist eine Skalierung, welche daher kommt, dass die durch (eq 7) umgeformten Vektoren keine Einheitsvektoren mehr sind. Durch die Beschränkungen der "c"s in a3 gilt $Q \in ]0..4[$. Da $e(t) = 0, t \in \{0,1\}$, kann das Fehlermaximum an den Extrema von e ausgewertet werden:

$$\frac{e(t)}{dt} = 0 \rightarrow \frac{1}{d_0} - \frac{1}{d_1} + \frac{d_0 - d_1}{(t \cdot d_0 + (1-t) \cdot d_1)^2} = 0 \qquad \text{(eq. 10a),}$$

was für den nicht trivalen Fall, dass $d_0 \neq d_1$ (andernfalls ist der Fehler identisch 0) ausgewertet werden zu:

$$(t(d_0 - d_1) + d_1)^2 = -\frac{d_0 - d_1}{\frac{1}{d_0} - \frac{1}{d_1}} = \frac{d_1 - d_0}{d_1 - d_0} d_0 d_1 = d_0 d_1$$

und damit

$$t = \frac{\pm \sqrt{d_0 d_1} - d_1}{d_0 - d_1} \qquad \text{(eq. 10b).}$$

Die Lösung ist eindeutig, da $t \in [0..1]$ und daher ein Pluszeichen vor der Wurzel stehen muss.

Dies ergibt ein handliches Kriterium, die Feinheit der Tesselierung festzulegen.

Durch Rückeinsetzen von (eq. 10b) in (eq. 10a) erhält man:

$$e(t) := Q\left|\left(\frac{\sqrt{d_0 d_1} - d_1}{d_0 - d_1}\right) \cdot \left(\frac{1}{d_0} - \frac{1}{d_1}\right) + \frac{1}{d_1} - \frac{1}{\frac{\sqrt{d_0 d_1} - d_1}{d_0 - d_1} \cdot (d_0 - d_1) + d_1}\right|$$

$$= Q\left|\left(\frac{\sqrt{d_0 d_1} - d_1}{d_0 d_1}\right) + \frac{1}{d_1} - \frac{1}{\sqrt{d_0 d_1}}\right| = Q\left|\frac{1}{d_1} - \frac{1}{d_0}\right| \text{ (eq. 11).}$$

Das ergibt das überraschende Resultat, dass ähnlich wie für (eq 1), Fehler<1 erzwingbar ist. Wenn $d_0$ vorgegeben ist, so bestimmt (eq 11), in welchem Bereich $d_1$ gewählt werden kann.

Es ist sogar so, dass mit der Tesselierung verhältnismässig sorglos umgegangen werden kann, solange man sich im Originalvolumen $G_0$ bewegt, weil man dann keiner Singularität nahekommt und die "d"s verhältnismässig gross bleiben. Für "d"s grösser als 1, ist die Methode durch den Geometrischen Fehler von (eq 1) begrenzt und nicht durch die Fehler der Shading Näherung (eq 9).

Bisher wurde das folgende gezeigt: die für das allgemeine Shading und Rendering notwendigen Skalierungen und Transformationen sind mit elementaren Rechenoperationen durchführbar. In den Vertices erhält man die korrekten Beleuchtungswerte, die interpolierten Werte enthalten höchstens Fehler zweiter Ordnung wie in (eq 9) beschrieben.

Die Auswertung in den Vertices ist ebenfalls elementar, und die Vertices sind vom Standpunkt des Rechenaufwandes nicht sehr dicht (und müssen auch nicht sehr dicht sein); ihre Auswertung ist folglich nicht der Flaschenhals der Berechnung.

Im folgenden wird nun die Erfindung anhand der schematischen Zeichnung näher erläutert. Es zeigen:

Fig. 1 Ein aus dem Stand der Technik bekanntes Verfahren zum Visualisierien eines Originalvolumes;

Fig. 2 Erzeugung einer ebenen Textur gemäss dem Stand der Technik;

Fig. 3 Linearisierung einer kugelschalenförmigen Textur;

Fig. 4 ein Ausführungsbeispiel des erfindungsgemässen Verfahrens;

Fig. 5 Beispiele für Texturen in Zylinderkoordinaten;

Fig. 6 Ausführungsbeispiel für eine Linearisierung in krummlinigen Koordinaten.

Die Figuren 1 bis 3 zeigen den Stand der Technik und wurden bereits Eingangs eingehend diskutiert.

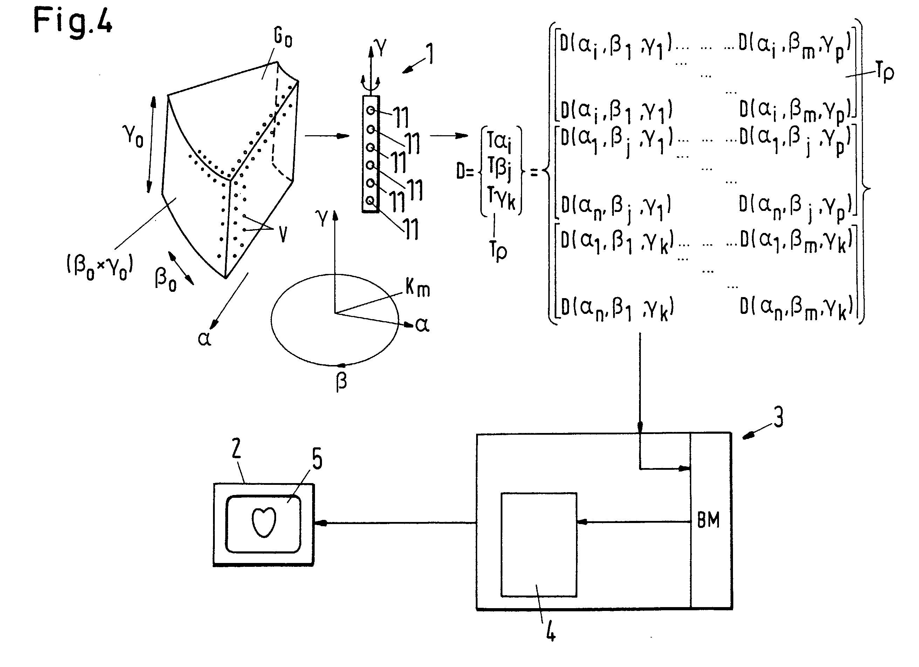

Fig. 4 zeigt schematisch die wichtigsten Schritte eines Ausführungsbeispiels des erfindungsgemässen Verfahrens. Anhand von Fig. 4 soll beispielhaft auf den für die Praxis wichtigen Fall Bezug genommen werden, dass ein Datensatz D auf Messwerten $D(\alpha, \beta, \gamma)$ beruht, die aus einer volumenaufgelösten Abtastung eines Körpers resultieren, und dass aus diesem Datensatz D eine dreidimensionale Darstellung erzeugt wird. Mit "dreidimensionaler Darstellung " ist dabei gemeint, dass die Darstellung tatsächlich dreidimensional ist, oder dass beispielsweise durch eine geeignete Projektionsvorrichtung eine stereoskopische Projektion erzeugt wird, oder dass die Projektion eben, beispielsweise auf einem Computermonitor erfolgt, aber ein dreidimensionaler Eindruck vermittelt wird, z.B. mittels Methoden der räumlichen oder perspektivischen Darstellung, insbesondere unter Verwendung eines entsprechenden Beleuchtungsmodells. Im speziellen können solche Darstellungen semi-transparent sein, so dass sie einen Einblick in den abgetasteten Körper gestatten.

Bei dem in Fig. 4 dargestellten Ausführungsbeispiel wird ein Originalvolumen $G_0$, beispielsweise das Herz $G_0$ eines menschlichen Körpers, mit einer Messeinrichtung 1, im vorliegenden Beispiel mit einer Ultraschall-Messeinrichtung 1, abgetastet. Eine solche Ultraschall-Messeinrichtung 1 umfasst beispielsweise mehrere Ultraschallwandler 11, von denen mehrere bezüglich einer Achse $\gamma$ benachbart zueinander angeordnet sind. Während des Betriebs wird die Ultraschall-Messeinrichtung 1 um die Achse $\gamma$ rotiert, wie dies der Doppelpfeil an der Achse $\gamma$ der Ultraschall-Messeinrichtung 1 in Fig. 4 andeutet. Dabei werden die einzelnen Ultraschallwandler 11 im wesentlichen parallel betrieben, so dass das Originalvolumen $G_0$, also beispielsweise ein Herz, gleichzeitig in mehreren parallelen Schichten, die jeweils im wesentlichen senkrecht zur $\gamma$ - Achse liegen, über einen Winkelbereich oder einen Sektor $(\beta_0 \, X_{\gamma o})$ mit Ultraschall abgetastet wird. Die Information bezüglich der dritten Dimension in Richtung $\alpha$ wird beispielsweise aus der Laufzeit der Ultraschallechos gewonnen.

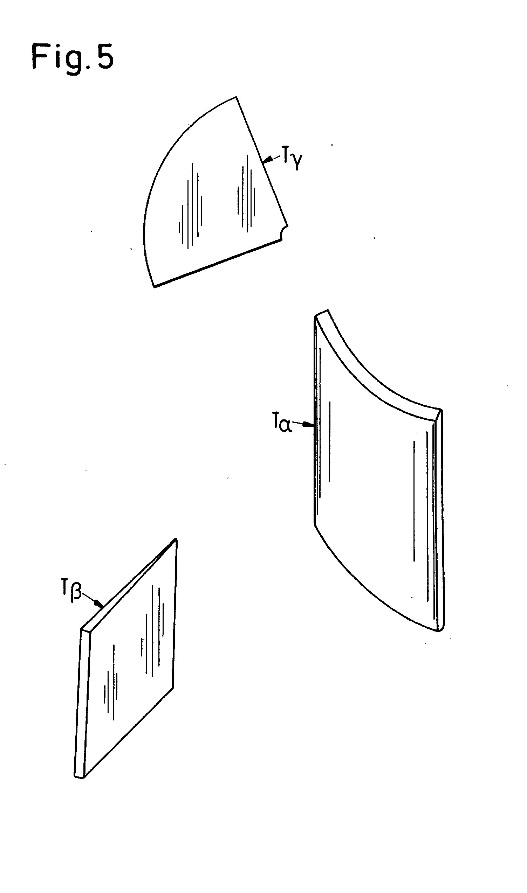

Die so gewonnenen volumenaufgelösten Daten $D(\alpha, \beta, \gamma)$ liegen, gegebenenfalls nach einer signaltechnischen Vorverarbeitung, somit als ein räumlich aufgelöster Datensatz D vor, der die Informationen der abzubildenden Struktur enthält. Dabei ist der Datensatz D durch sognannte Texturen $T_\rho$ aufgebaut, die Schnitte durch das Orginalvolumen $G_0$ repräsentieren. Durch die Ultraschall-Messeinrichtung 1 selbst bzw. durch deren Arbeitsweise ist das Messkoordinatensystem $K_m$, in welchem die Daten $D(\alpha, \beta, \gamma)$ vorliegen, vorgegeben. Bei dem hier beschriebenen Beispiel handelt es sich um Zylinderkoordinaten. Die Texturen $T_\rho$ entsprechen dann, wie in Fig. 5 gezeigt, drei verschiedenen Flächentypen, also Textur-Typen $T_\alpha$, $T_\beta$ und $T_\gamma$, auf denen jeweils eine der Zylinderkoordinaten $\alpha$, $\beta$, $\gamma$ einen konstanten Wert hat. Dabei ist die Anwendung des erfindungsgemässen Verfahrens selbstverständlich keineswegs auf Zylinderkoordinaten beschränkt, sondern auch auf andere krummlinige Koordinaten und selbstverständlich auch auf karthesische Koordinaten anwendbar und das zuvor gesagte gilt für andere als Zylinderkoordinaten völlig analog. Der durch die Ultraschall-Messeinrichtung 1 generierte Datensatz D wird in eine Datenverarbeitungsanlage 3 geladen und dort verarbeitet. Dabei wird, eventuell nach einer mathematischen Aufbereitungsphase, zunächst das Beleuchtungsmodell, d.h. die diesem zugrunde liegenden Beleuchtungsfunktionen im Messkoordinatensystem $K_m$ ausgewertet, d.h. es wird das oben definierte "Innere Shading" durchgeführt.

Danach werden die Daten dem ebenfalls oben definierten "Rendern" unterzogen und der Grafikhardware 4 zugeführt, mit deren Hilfe eine dreidimensionale Darstellung des zu projizierenden Bildes 5, beispielsweise auf einem Beobachtungsmonitor 2 erfolgt.

Fig. 5 zeigt schematisch die drei Textur-Typen, für den Fall , dass das Messkoordinatensystem $K_m$ Zylindersymmetrie besitzt. Besitzt das Messkoordinatensystem $K_m$ eine andere Symmetrie, beispielsweise Kugelsymmetrie, haben die Texturen $T_\alpha$, $T_\beta$ und $T_\gamma$ bzw. die sie repräsentierenden Flächen selbstverständlich entsprechend der Symmetrie des Koordinatensystems, eine andere Geometrie.

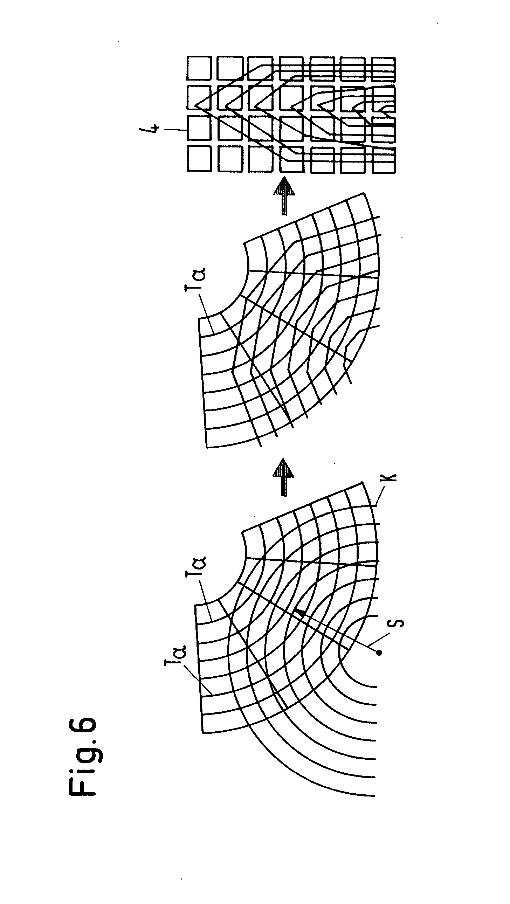

Erfindungsgemäss wird nach dem Durchführen des Shadings, d.h. nach dem Auswerten des Beleuchtungsmodells BM im Messkoordinatensystem $K_m$, der Datensatz D, bzw. werden die Texturen $T\rho$ im Messkoordinatensystem $K_m$ linearisiert, d.h. dem Vorgang des Renderns unterzogen. Dies soll beispielhaft in Fig. 6 in einer schematischen Darstellung an einer Gruppe von $T\alpha$ Texturen eines Datensatzes in einem zylindersymmetrischen Messkoordinatensystem $K_m$ noch kurz erläutert werden.

Wie bereits eingehend erläutert, wird der Sehvektor S (bzw. der Beleuchtungsvektor) weder auf ebenen Texturen $T\rho$ noch auf krummlinig begrenzten Texturen $T\rho$ einen konstanten Betrag haben; vielmehr ist der Betrag dieser Vektoren, wie im linken Bild von Fig. 6 schematisch dargestellt, auf Kugelschalen K konstant. Somit ändert sich der Sehvektor S im allgemeinen über einen Schnitt, d.h. über eine Textur $T\rho$.

Weil somit betragsmässige Änderungen des Sehvektors S in der Regel nicht linear von den Texturkoordinaten der Texturen $T\rho$, abhängen, können diese auch nicht auf der Graphikhardware 4 unmittelbar kodiert werden. Daher werden die krummlinig begrenzten Texturen $T\rho$, wie im mittleren Bild von Fig. 6 dargestellt, linearisiert, so dass geradlinig begrenzte Teilflächen entstehen. Die Eckpunkte dieser Teilflächen können nun ohne eine Koordinatentransformation durchzuführen auf der Graphikhardware 4, wie im rechten Bild von Fig. 6 schematisch dargestellt, kodiert und beispielsweise auf einem Beobachtungsmonitor 2 als Bild 5 dargestellt werden.

Durch das erfindungsgemässe Verfahren ist es somit möglich, auf besonders elegante und effiziente Weise mehrdimensionale Datensätze, die in beliebigen krummlinigen Koordinaten, z.B. in Zylinder- oder Kugelsymmetrie vorliegen, ohne grossen Rechenaufwand und enorm schnell auf gewöhnlicher Graphikhardware unter Berücksichtigung eines entsprechenden Beleuchtungsmodells unmittelbar zu kodieren. Das wird dadurch erreicht, dass der Vorgang des sogenannten Shadings, das heisst der Auswertung der Beleuchtungsfunktionen und des Renderns, d.h. der Vorgang der Linearisierungsoperationen, vollständig getrennt sind: Die Beleuchtungsfunktionen werden im Originalvolumen, also im Messkoordinatensystem ausgewertet und dann erst linearisiert. Da die Auswertung der Datensätze mit elementaren Rechenoperationen möglich ist und das Shading ausschliesslich im Originalvolumen und nicht erst, wie aus dem Stand der Technik bekannt, im Projektionsraum stattfindet, ist das erfindungsgemässe Verfahren enorm schnell, so dass in Echtzeit die Visualisierung auch von sehr komplexen Datensätzen möglich wird. Selbst die Visualisierung bewegter Vorgänge in stereoskopischer Darstellung wird mit hoher Auflösung und mit Bildwiederholraten, die typischen Videofrequenzen entsprechen, möglich. Dadurch, dass die Beleuchtungsfunktionen im Originalvolumen und nicht im Projektionsraum ausgewertet werden, ist es mit dem erfindungsgemässen Verfahren aufgrund seiner beachtlichen Geschwindigkeit bei der Durchführung der Visualisierungsoperationen möglich, auch sehr komplexe Beleuchtungsmodelle zu verwenden, so dass hochaufgelöste und realistische Darstellungen von bisher nicht gekannter Qualität erreichbar sind.

## Patentansprüche

1. Verfahren zum Visualisieren eines räumlich aufgelösten Datensatzes (D) unter Verwendung eines Beleuchtungsmodells (BM), wobei ein Datum $(D(\alpha,\beta,\gamma))$ des Datensatzes (D) jeweils einem Volumenelement (V) zugeordnet ist, dessen Lage durch Koordinaten $(\alpha, \beta, \gamma)$ in einem Messkoordinatensystem $(K_M)$ beschrieben wird, wobei die Daten $(D(\alpha,\beta,\gamma))$ als mindestens eine Textur $(T\alpha_i, T\beta_j, T\gamma_k)$ in eine Grafikhardware geladen werden, um in einem Projektionsraum eine bildliche Darstellung (5) zu erzeugen, **dadurch gekennzeichnet, dass** das Beleuchtungsmodell (BM) im Messkoordinatensystem $(K_M)$ ausgewertet wird.

2. Verfahren nach Anspruch 1, bei welchem die Daten $(D(\alpha,\beta,\gamma))$ des Datensatzes (D) ohne Transformation aus dem Messkoordinatensystem $(K_M)$ in ein anderes Koordinatensystem, insbesondere ohne Transformation in ein karthesisches und / oder isotropes Koordinatensystem, verarbeitet werden.

3. Verfahren nach einem der vorangehenden Ansprüche, bei welchem das Messkoordinatensystem $(K_M)$ ein nichtkarthesisches Messkoordinatensystem $(K_M)$ ist.

4. Verfahren nach einem der vorangehenden Ansprüche, bei welchem das Messkoordinatensystem $(K_M)$ ein Zylinder- oder Kugelkoordinatensystem $(K_M)$ ist.

5. Verfahren nach einem der vorangehenden Ansprüche, bei welchem zwischen den Daten $(D(\alpha,\beta,\gamma))$ des Datensatzes (D) im Messkoordinatensystem $(K_M)$ linear interpoliert wird.

6. Verfahren nach einem der vorangehenden Ansprüche, bei welchem das Beleuchtungsmodell im Datensatz (D) nahe einer Singularität ausgewertet wird.

**7.** Verfahren nach einem der vorangehenden Ansprüche, bei welchem die Daten $(D(\alpha,\beta,\gamma))$ des Datensatzes (D) eine volumenaufgelöste Abtastung eines Körpers $(G_o)$ repräsentieren, und bei welchem die bildliche Darstellung (5) eine dreidimensionale, insbesondere eine semi-transparente Darstellung (5) des Körpers $(G_o)$ ist

**8.** Verfahren nach einem der vorangehenden Ansprüche, bei welchem die bildliche Darstellung (5) als stereoskopische Projektion erzeugt wird.

**9.** Verfahren nach einem der vorangehenden Ansprüche, bei welchem die Daten $D((\alpha,\beta,\gamma))$ des Datensatzes (D) mittels einer Ultraschall-Messeinrichtung (1) generiert werden.

**10.** Verwendung eines Verfahrens gemäss einem der vorangehenden Ansprüche, insbesondere für medizinische Zwecke, zum schnellen Generieren dreidimensionaler Darstellungen (5) eines Körpers $(G_0)$, insbesondere eines menschlichen Körpers oder Teilen davon, anhand von messtechnisch gewonnenen Daten $(D(\alpha,\beta,\gamma))$.

# Fig.1

$$D' = \begin{Bmatrix} T\alpha_i' \\ T\beta_j' \\ T\gamma_k' \end{Bmatrix} = \begin{bmatrix} D'(\alpha_i,\beta_1,\gamma_1) & \cdots & D'(\alpha_i,\beta_m,\gamma_p) \\ & \cdots & \\ D'(\alpha_i',\beta_1',\gamma_1') & & D'(\alpha_i',\beta_m',\gamma_p') \\ D'(\alpha_1',\beta_j',\gamma_p') & \cdots & D'(\alpha_1',\beta_j',\gamma_p') \\ & \cdots & \\ D'(\alpha_n',\beta_j',\gamma_1') & & D'(\alpha_n',\beta_j',\gamma_p') \\ D'(\alpha_1',\beta_1',\gamma_k') & \cdots & D'(\alpha_1',\beta_m',\gamma_k') \\ & \cdots & \\ D'(\alpha_n',\beta_1',\gamma_k') & & D'(\alpha_n',\beta_m',\gamma_k') \end{bmatrix}$$

$T\rho'$

$G_0'$, $\gamma'$, $\beta'$, $\alpha'$, $K_m'$, $V'$

$1'$, $2'$, $3'$, $4'$, $5'$

EP 1 473 677 A1

Fig.2

Fig.3

# Fig.4

$$D = \begin{Bmatrix} T\alpha_i \\ T\beta_j \\ T\gamma_k \\ \\ T\rho \end{Bmatrix} = \begin{Bmatrix} \begin{bmatrix} D(\alpha_i,\beta_1,\gamma_1) \dots \dots \dots D(\alpha_i,\beta_m,\gamma_p) \\ \dots \\ D(\alpha_i,\beta_1,\gamma_1) \qquad \dots \qquad D(\alpha_i,\beta_m,\gamma_p) \end{bmatrix}^{T\rho} \\ \begin{bmatrix} D(\alpha_1,\beta_j,\gamma_1) \dots \dots \dots D(\alpha_1,\beta_j,\gamma_p) \\ \dots \\ D(\alpha_n,\beta_j,\gamma_1) \qquad \dots \qquad D(\alpha_n,\beta_j,\gamma_p) \end{bmatrix} \\ \begin{bmatrix} D(\alpha_1,\beta_1,\gamma_k) \dots \dots \dots D(\alpha_1,\beta_m,\gamma_k) \\ \dots \\ D(\alpha_n,\beta_1,\gamma_k) \qquad \dots \qquad D(\alpha_n,\beta_m,\gamma_k) \end{bmatrix} \end{Bmatrix}$$

$G_0$
$\gamma_0$
$(\beta_0 \times \gamma_0)$
$\beta_0$
$V$
$\alpha$
$\gamma$
$K_m$
$\alpha$
$\beta$
$11$
$BM$
$2$ $5$ $3$ $4$

# Fig. 5

Fig.6

| | Europäisches Patentamt | **EUROPÄISCHER RECHERCHENBERICHT** | Nummer der Anmeldung EP 04 40 5196 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WESTERMANN R ET AL: "Efficiently using graphics hardware in volume rendering applications" COMPUTER GRAPHICS. PROCEEDINGS. SIGGRAPH 98 CONFERENCE PROCEEDINGS, PROCEEDINGS OF SIGGRAPH 98: 25TH INTERNATIONAL CONFERENCE ON COMPUTER GRAPHICS AND INTERACTIVE TECHNIQUES, ORLANDO, FL, USA, 19-24 JULY 1998, August 1998 (1998-08), Seiten 169-177, XP000879117 1998, New York, NY, USA, ACM, USA ISBN: 0-89791-999-8 | 1 | G06T15/50 |
| A | * Seite 171 * ----- | 2-10 | |
| X,D | EP 1 059 612 A (SULZER MARKETS AND TECHNOLOGY) 13. Dezember 2000 (2000-12-13) * das ganze Dokument * * Absatz [0064] * ----- | 1-10 | |
| X | VAN GELDER A ET AL: "Direct volume rendering with shading via three-dimensional textures" PROCEEDINGS 1996 SYMPOSIUM ON VOLUME VISUALIZATION (IEEE CAT. NO.96TB100087), PROCEEDINGS OF 1996 SYMPOSIUM ON VOLUME VISUALIZATION, SAN FRANCISCO, CA, USA, 28-29 OCT. 1996, 1996, Seiten 23-30, 98, XP000724426 1996, New York, NY, USA, ACM, USA ISBN: 0-89791-865-7 | 1 | RECHERCHIERTE SACHGEBIETE (Int.Cl.7) G06T |
| A | * Zusammenfassung * Abschnitt 3. ----- -/-- | | |

Der vorliegende Recherchenbericht wurde für alle Patentansprüche erstellt

| Recherchenort | Abschlußdatum der Recherche | Prüfer |
|---|---|---|
| München | 20. August 2004 | Meinl, W |

EPO FORM 1503 03.82 (P04C03)

**Europäisches Patentamt**

## EUROPÄISCHER RECHERCHENBERICHT

Nummer der Anmeldung

EP 04 40 5196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | BRODLIE K ET AL: "Recent advances in volume visualization" COMPUTER GRAPHICS FORUM, JUNE 2001, BLACKWELL PUBLISHERS FOR EUROGRAPHICS ASSOC, UK, Bd. 20, Nr. 2, Juni 2001 (2001-06), Seiten 125-148, XP001023536 ISSN: 0167-7055 * Zusammenfassung * Abschnitt 4, insbesondere 4.2.2. und 4.4.2 ----- | 1-10 | |
| A | PFISTER H ET AL: "THE VOLUMEPRO REAL-TIME RAY-CASTING SYSTEM" COMPUTER GRAPHICS PROCEEDINGS. ANNUAL CONFERENCE SERIES. SIGGRAPH, XX, XX, 8. August 1999 (1999-08-08), Seiten 251-260, XP001024730 Abschnitte 2. und 3.5 * Zusammenfassung * ----- | | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 20. August 2004 | Meinl, W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 40 5196

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-08-2004

| Im Recherchenbericht angeführtes Patentdokument | | Datum der Veröffentlichung | Mitglied(er) der Patentfamilie | | Datum der Veröffentlichung |
|---|---|---|---|---|---|
| EP 1059612 | A | 13-12-2000 | EP | 1059612 A1 | 13-12-2000 |
| | | | JP | 2001022951 A | 26-01-2001 |
| | | | US | 6606089 B1 | 12-08-2003 |

EPO FORM P0461

Für nähere Einzelheiten zu diesem Anhang : siehe Amtsblatt des Europäischen Patentamts, Nr.12/82